(19) Europäisches Patentamt
European Patent Office
Office européen des brevets

(11) Veröffentlichungsnummer : **0 099 856**
**B1**

(12) # EUROPÄISCHE PATENTSCHRIFT

(45) Veröffentlichungstag der Patentschrift : **11.11.87**

(51) Int. Cl.⁴ : **C 08 F283/10**, G 03 C 1/68, C 09 D 3/48

(21) Anmeldenummer : **83810267.1**

(22) Anmeldetag : **20.06.83**

(54) **Photopolymerisierbares Beschichtungsmittel, photopolymerisierbares Material und seine Verwendung.**

(30) Priorität : **24.06.82 CH 3885/82**

(43) Veröffentlichungstag der Anmeldung : **01.02.84 Patentblatt 84/05**

(45) Bekanntmachung des Hinweises auf die Patenterteilung : **11.11.87 Patentblatt 87/46**

(84) Benannte Vertragsstaaten : **CH DE FR GB LI SE**

(56) Entgegenhaltungen :
**EP-A- 0 041 108**
**US-A- 4 308 185**

(73) Patentinhaber : **CIBA-GEIGY AG**
**Klybeckstrasse 141**
**CH-4002 Basel (CH)**

(72) Erfinder : **Bauer, Sigrid, Dr.**
**61, route de Taillepied**
**CH-1095 Lutry (CH)**

**EP 0 099 856 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein photopolymerisierbares Beschichtungsmittel aus einem nieder- und einem höhermolekularen Epoxidharz, einem polyäthylenisch ungesättigten Monomer mit endständigen Aethylengruppen und einem Photoinitiator, ein photopolymerisierbares Material, bei dem ein Träger mit diesem Mittel beschichtet ist, sowie dessen Verwendung.

Epoxidharze werden auf Grund ihrer guten mechanischen, thermischen und chemischen Beständigkeit auch als photovernetzbare Harze in der Elektronik verwendet, z. B. als Photoresists oder Schutzlacke. So ist aus der US-PS 3 956 043 ein photosensitives Epoxidharz bekannt, das die photosensitive Gruppe im Molekül enthält und mit dem gute Ergebnisse erzielt werden können. Als nachteilig wird die relativ langsame Reaktion bei der Belichtung empfunden, die durch die zu hohe Eigenabsorption des Epoxidharzes verursacht wird.

Es sind auch photovernetzbare Ueberzugsmassen auf der Basis von Reaktionsprodukten von monoäthylenisch ungesättigten Carbonsäuren und Bisphenol- und/oder Novolakepoxidharzen bekannt, vgl. z. B. EP-A-0 003 040, DE-OS 24 59 179 und GB-A 2 032 939. Diese Ueberzugsmassen zeigen jedoch verschiedene Nachteile. Die verwendeten Epoxi(meth) acrylate sind relativ unbeständig, müssen inhibiert werden und können nur in verdünnter Lösung für längere Zeit aufbewahrt werden. Ihre Herstellung ist durch lange Reaktionszeiten unwirtschaftlich und ihre Lichtempfindlichkeit ist relativ gering. Die mit ihnen erzeugten Lackmasken sind spröde und haften schlecht auf Kupfer.

Aufgabe der vorliegenden Erfindung ist es, lichtempfindliche Ueberzugsmassen auf der Basis von Epoxidharzen zu schaffen, die die erwähnten Nachteile nicht aufweisen.

Gegenstand vorliegender Erfindung ist ein photopolymerisierbares Beschichtungsmittel, enthaltend gegebenenfalls neben üblichen Zusätzen

a) mindestens ein Epoxidharz auf der Basis von aromatischen Polyolen und Epichlorhydrin mit einem Epoxidwert von 0,1 bis 0,6 Aequivalenten pro kg Harz und einem mittleren Molekulargewicht von 1 000 bis 10 000,

b) mindestens ein Epoxidharz auf der Basis von aromatischen Polyolen und Epichlorhydrin mit einem mittleren Molekulargewicht von über 10 000, wobei das Gewichtsverhältnis von a : b grösser als 1 ist,

c) mindestens ein lichtempfindliches, polyäthylenisch ungesättigtes Monomer mit endständigen Aethylengruppen und

d) mindestens einen Photoinitiator und/oder Sensibilisator.

Das erfindungsgemässe Beschichtungsmittel kann als solches oder in einem organischen Lösungsmittel gelöst angewendet werden, wobei Konzentrationen von 5 bis 80, vorzugsweise 5 bis 60 Gew.% der Komponenten a) bis d) und 95 bis 20, vorzugsweise 95 bis 40 Gew.% Lösungsmittel zugegen sein können.

Geeignete organische Lösungsmittel sind polare, besonders polare, aprotische Lösungsmittel, die alleine oder in Mischungen aus mindestens zwei Lösungsmitteln verwendet werden können. Geeignete Lösungsmittel sind zum Beispiel: Aether wie Diäthyläther, Dibutyläther, Tetrahydrofuran, Dioxan, Methyläthylenglykol, Dimethyläthylenglykol, Dimethyldiäthylenglykol, Diäthyldiäthylenglykol, Dibutyldiäthylenglykol, Dimethyltriäthylenglykol, halogenierte Kohlenwasserstoffe wie Methylenchlorid, Chloroform, Tetrachlorkohlenstoff, 1,2-Dichloräthan, 1,1,2-Trichloräthan, 1,1,2,2-Tetrachloräthan, Carbonsäureester und Lactone wie Propylencarbonat, Essigsäureäthylester, Propionsäuremethylester, Benzoesäureäthylester, Aethylglykolacetat, 2-Methoxyäthylacetat, γ-Butyrolacton, γ-Valerolacton und Mevalolacton, Sulfoxide, wie Dimethylsulfoxid, Tetramethylsulfoxid, Sulfone wie Dimethylsulfon, Diäthylsulfon, Trimethylensulfon, Tetramethylensulfon, Ketone wie Dimethylketon, Methyläthylketon, Methylisobutylketon und Cyclohexanon, substituierte Benzole wie Chlorbenzol und Nitrobenzol.

Bei den Epoxidharzen handelt es sich bevorzugt um solche auf der Basis von Novolaken und besonders Bisphenolen mit Epichlorhydrin. Die Novolake können aus gegebenenfalls substituierten Phenolen wie z. B. Xylenol, Kresol, Resorcin und besonders Phenol und Aldehyden, besonders Formaldehyd, aufgebaut sein.

Die Bisphenole können durch folgende Formel dargestellt werden:

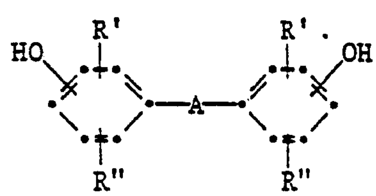

Die Hydroxylgruppen können sich in m-Stellung, besonders aber in p-Stellung befinden, R' und R'' können in dieser Formel Alkyl mit 1 bis 6 C-Atomen, Halogen wie Chlor oder Brom und insbesondere Wasserstoffatome bedeuten. A kann für eine direkte Bindung stehen, oder

$$\overset{O}{\overset{\|}{}}\,\,O,\ \overset{O}{\overset{\|}{C}},\ \overset{O}{\overset{\|}{O}}C,\ O\overset{O}{\overset{\|}{C}}O,\ NR',\ S,\ SO,\ SO_2,$$

gegebenenfalls substituiertes Alkyliden, Cycloalkyliden oder Alkylen bedeuten.

Beispiele für gegebenenfalls substituiertes Alkyliden sind Aethyliden, 1,1- oder 2,2-Propyliden, 2,2-Butyliden, 1,1-Isobutyliden, Pentyliden, Hexyliden, Heptyliden, Octyliden, Dichloräthyliden, Trichloräthyliden. Beispiele für gegebenenfalls substituiertes Alkylen sind Methylen, Aethylen, Phenylmethylen, Diphenylmethylen, Methylphenylmethylen. Beispiele für Cycloalkyliden sind Cyclopentyliden, Cyclohexyliden, Cycloheptyliden und Cyclooctyliden.

Beispiele für Bisphenole sind :

Bis-(p-hydroxyphenyl)-äther oder -thioäther, Bis-(p-hydroxyphenyl)-sulfon, Bis-(p-hydroxyphenyl)-methan, 1,2-Bis-(p-hydroxyphenyl)-äthan, Phenyl-bis-(p-hydroxyphenyl)-methan, Diphenyl-bis-(p-hydroxyphenyl)-methan, Diphenyl-bis-(p-hydroxyphenyl)-methan, 2,2-Bis-(4'-hydroxy-3', 5'-dimethylphenyl)-propan, 1,1- oder 2,2-Bis-(p-hydroxyphenyl)-butan, 1,1-Dichlor- oder 1,1,1-Trichlor-2,2-bis-(p-hydroxyphenyl)-äthan, 1,1-Bis-(p-hydroxyphenyl)-cyclopentan und besonders 2,2-Bis-(p-hydroxyphenyl)-propan (Bisphenol A) und 1,1-Bis-(p-hydroxyphenyl)-cyclohexan (Bisphenol C).

Die Epoxidharze umfassen auch vorreagierte Harze, die durch Reaktion der erwähnten Epoxidharze mit geeigneten Härtern wie Polyaminen, Polyolen und Polycarbonsäuren erhalten werden. Bevorzugt sind die Polykondensate aromatischer Polyole und Epichlorhydrin.

Die Epoxidharze sind bekannt und käuflich. Das Epoxidharz a) weist bevorzugt ein mittleres Molekulargewicht von 1 000 bis 6 000 und besonders 2 000 bis 4 000 auf. Der Epoxidwert ist bevorzugt 0,2 bis 0,5 Aequivalente pro kg Harz. Die Erweichungsbereiche liegen im allgemeinen zwischen 80 °C und 120 °C, vorzugsweise zwischen 90 °C und 110 °C.

Die Epoxidharze b) können bevorzugt ein mittleres Molekulargewicht von 20 000 bis 100 000, insbesondere 20 000 bis 80 000, aufweisen. Sie enthalten im wesentlichen keine Epoxidgruppen und sind daher für sich nicht härtbar.

Das Gewichtsverhältnis der Epoxidharze a) : b) beträgt bevorzugt 9 : 1 bis 2 : 1, besonders 9 : 1 bis 3 : 1.

Es ist ferner möglich, andere übliche Epoxidharze mitzuverwenden. Diese können höhere Epoxidwerte aufweisen, z. B. 1 bis 6, vorzugsweise 1 bis 4 Aequivalente pro kg Harz. Die Menge kann z. B. 1 bis 30 Gew.%, vorzugsweise 1 bis 20 Gew.%, betragen, bezogen auf das Epoxidharz a).

Bei den ungesättigten Monomeren handelt es sich um solche, die unter dem Einfluss von elektromagnetischer Wellenstrahlung, besonders UV-Licht, zu reagieren vermögen. Sie enthalten mindestens zwei, bevorzugt 2 bis 4, endständige Aethylengruppen. Eine Gruppe solcher Monomere sind beispielsweise Vinylester wie Divinylsuccinat, Divinyladipat, Divinylterephthalat, Butan-1,4-divinylsulfonat und Benzol-1,4-divinylsulfonat.

Bevorzugt sind die Amide und besonders Ester von Acrylsäure und Methacrylsäure und aliphatischen, cycloaliphatischen und aromatischen Polyaminen bzw. Polyolen. Beispiele für Polyamine sind Aethylen-, Propylen-, Butylen-, Hexylendiamin, Phenylendiamin, Benzylendiamin, Naphthylendiamin, Diäthylentriamin, Triäthylentetramin, Diaminoäthyläther. Beispiele für Polyole sind lineare und verzweigte Alkylendiole wie Aethylen-, Propylen-, Butylen-, Pentylen-, Hexylen-, Octylendiol, Polyoxaalkylendiole wie Diäthylen- und Triäthylenglykol und Polyäthylenglykole mit einem Molekulargewicht von 200 bis 500, 1,4-Dihydroxycyclohexan, 1,4-Di(hydroxymethyl)-cyclohexan, Dihydroxybenzole, Hydroxymethylphenole, Triole wie 1,2,3-Trihydroxypropan, 1,2,4-Trihydroxybutan, Trimethylolpropan sowie Pentaerythrit, Dipentaerythrit. Bevorzugt sind die aliphatischen und cycloaliphatischen Diole, Trimethylolpropan und Pentaerythrit.

Die Monomeren c) werden bevorzugt in solchen Mengen eingesetzt, dass das Gewichtsverhältnis der Epoxidharze a) und b) zum Monomer c) von 1 : 9 bis 9 : 1, vorzugsweise 1 : 9 bis 7 : 3 und besonders 4 : 6 bis 6 : 4, beträgt. Das zu wählende Mengenverhältnis richtet sich hierbei im wesentlichen nach der gewünschten Applikation.

Das erfindungsgemässe Beschichtungsmittel enthält zusätzlich einen Photoinitiator und/oder einen Sensibilisator, bevorzugt in Mengen von 0,1 bis 10, besonders 1 bis 5 Gew.%, bezogen auf das Monomer c). Diese Substanzen sind bekannt. Beispiele sind α-Halogenacetophenone, Benzile, Benzoine oder deren Aether, Benzophenone (Michlers Keton), Benzilacetale, Anthrachinone, Thioketone, Thioxanthone, Acridine, Phenazine, 2,4,5-Triphenyl-imidazolyl-Dimere in Gegenwart von Wasserstoffdonatoren, Farbstoff/Redoxsysteme. Als Sensibilisatoren seien Bromoform, Chloranil, 2,4-Dinitrotoluol, Styrylverbindungen, Triphenylmethanfarbstoffe genannt.

Die Herstellung des erfindungsgemässen Beschichtungsmittels erfolgt in bekannter Weise durch Vermischen der Komponenten, gegebenenfalls unter Mitverwendung von Lösungsmitteln in hierfür geeigneten Mischgefässen. Hierbei können übliche Zusatzmittel einverleibt werden, z. B. Mattierungsmittel, Verlaufmittel, feinteilige Füllstoffe, Flammschutzmittel, Antioxidantien, Stabilisatoren (z. B. : Benzotriazol), Farbstoffe, Pigmente und Haftvermittler.

Das erfindungsgemässe Beschichtungsmittel ist eine leicht- bis hochviskose Flüssigkeit, das eine gute Lagerstabilität, hohe Lichtempfindlichkeit und breiten Verarbeitungsspielraum aufweist. Es eignet sich besonders zur Herstellung von Schutz- und Passivierlacken und als photographisches Aufzeichnungsmaterial zur Herstellung von Photomasken, Lötstopp- und Isoliermasken, Aetzreservagen, Galvanoreservagen, gedruckten Schaltungen und integrierter Schaltkreise, Druckplatten, besonders Offsetdruckplatten, Duplizierfilmen und Farbprüffolien. Ferner kann es als Siebdrucklack verwendet werden.

Das Beschichtungsmittel kann mittels üblicher Methoden wie Tauch-, Streich- und Sprühverfahren, Schleuder-, Kaskaden- und Vorhanggiessverfahren sowie dem Siebdruckverfahren auf geeignete Trägermaterialien aufgebracht werden, z. B. Kunststoffe, Metalle und Metallegierungen, Halbmetalle, Halbleiter, Glas, Keramik, Holz, Quarz und Siliciumnitrid. Die Schichtdicken richten sich nach dem Verwendungszweck und können 1 µm bis 60 µm betragen. Das so hergestellte photovernetzbare Material und seine Verwendung als photographisches Aufzeichnungsmaterial für Reliefabbildungen ist ebenfalls Gegenstand vorliegender Erfindung.

Nach dem Beschichten werden mitverwendete Lösungsmittel durch Erwärmen mit oder ohne Vakuum entfernt. Die so erhaltenen Beschichtungen können je nach Zusammensetzung nicht ganz klebfrei sein, wodurch die Oberfläche durch Staub verunreinigt werden kann und eine Kontaktbelichtung nicht möglich ist. In solchen Fällen empfiehlt es sich, vor der weiteren Verarbeitung eine flächenmässige Vorbelichtung vorzunehmen. Hierdurch werden trockene und klebfreie Beschichtungen erhalten.

Das beschichtete Material wird danach bildmässig belichtet, wobei für die Herstellung von photographischen Abbildungen durch eine Photomaske belichtet wird. Danach kann vor dem Entwickeln mit geeigneten Lösungsmitteln das Bild durch Tempern fixiert werden.

Man kann so permanente, besonders aber temporäre Schutzüberzüge und Abbildungen herstellen, die nach Erfüllung der gewünschten Schutzfunktionen wieder entfernt werden.

Zur Herstellung permanenter Ueberzüge und Abbildungen mischt man dem erfindungsgemässen Beschichtungsmittel vorteilhaft einen für Epoxidharze üblichen Härter, gegebenenfalls zusammen mit einem Härtungsbeschleuniger, zu. Es wurde gefunden, dass die erfindungsgemässen Beschichtungsmittel in Gegenwart eines Härters, z. B. Dicyandiamid, im unbelichteten Zustand, thermisch nicht ausgehärtet werden können. Ueberraschend wird jedoch bei Anwendung von Wärme eine Verfestigung der durch Belichtung vernetzten Bereiche beobachtet. Damit ist es möglich, nach der bildmässigen Belichtung durch Tempern die Bildbereiche zu erhärten und danach das Bild zu entwickeln. Die Aushärtung kann auch nach der Entwicklung vorgenommen werden. Die Härter und gegebenenfalls Härtungsbeschleuniger werden im allgemeinen in Mengen von 0,1 bis 10 Gew.%, vorzugsweise 0,5 bis 5 Gew.%, verwendet, bezogen auf das Epoxidharz a).

Geeignete Härter sind z. B. Dicyandiamid, mehrbasische Carbonsäuren und ihre Anhydride, z. B. Phthalsäureanhydrid, $\Delta^4$-Tetrahydrophthalsäureanhydrid, Hexahydrophthalsäureanhydrid, 4-Methylhexahydrophthalsäureanhydrid, 3,6-Endomethylen-$\Delta^4$-tetrahydrophthalsäureanhydrid, 4-Methyl-3,6-endomethylen-$\Delta^4$-tetrahydrophthalsäureanhydrid (= Methylnadicanhydrid), 3,4,5,6,7-Hexachlor-3,6-andomethylen-$\Delta^4$-tetrahydrophthalsäureanhydrid, Bernsteinsäureanhydrid, Adipinsäureanhydrid, Trimethyladipinsäureanhydrid, Azelainsäureanhydrid, Sebacinsäureanhydrid, Maleinsäureanhydrid, Decenylbernsteinsäureanhydrid ; Pyromellitsäuredianhydrid oder Gemische solcher Anhydride, ferner Mon-, Di- und Triäthanolamin.

Geeignete Härtungsbeschleuniger sind z. B. Harnstoffderivate wie Chlortoluron ; Phosphorsäure ; und Imidazole wie 2-Aethyl-4-methyl-imidazol.

Als besonders vorteilhaft hat es sich erwiesen, säuregruppenhaltige Polymere zusätzlich als Härter zu verwenden, wobei auch übliche Härter und/oder Härtungsbeschleuniger miteingesetzt werden können. Man erhält hierdurch nach der Beschichtung trockene und klebfreie Oberflächen, was ein wesentlicher verarbeitungstechnischer Vorteil ist. Die säuregruppenhaltigen Polymeren weisen bevorzugt Säurezahlen von 10 bis 500, besonders 20 bis 200 mg KOH/g Polymer auf. Sie werden bevorzugt in solchen Mengen eingesetzt, dass auf 1 Aequivalent Epoxidgruppen höchstens 1 Aequivalent, bevorzugt 0,45 bis 0,75 Aequivalente Säuregruppen entfallen. Sie können mittlere Molekulargewichte von z. B. 2 000 bis 100 000, vorzugsweise 5 000 bis 80 000, besonders 10 000 bis 50 000, aufweisen.

Es kann sich bei diesen Polymeren z. B. um Polyester aus aliphatischen, cycloaliphatischen und aromatischen Dicarbonsäuren und Polyolen handeln, in deren Polymerketten endständige Carboxylgruppen enthalten sind. Bevorzugt sind Homo- und Copolymere aus äthylenisch ungesättigten Säuren und gegebenenfalls äthylenisch ungesättigten Comonomeren. Geeignete Säuren sind z. B. Vinylsulfonsäure und besonders Acrylsäure, Methacrylsäure und Maleinsäure. Geeignete Comonomere sind z. B. α-Olefine wie Aethylen, Propylen, n-Butylen, Isobutylen, Pentylen und Hexylen, Vinylhalogenide wie Vinylchlorid, Vinylbromid, Vinylfluorid, Terafluoräthylen und Vinylidenchlorid, aromatische Vinylverbindungen wie Styrol, Methylstyrol, Vinyltoluol oder α-Chlorstyrol, heterocyclische Vinylverbindungen wie Vinylpyrrolidon, Vinylcarbazol, Vinylpyridin, Vinylimidazol, Vinylketone wie Methylvinylketon, Vinylester wie Vinylacetat, Vinyläther wie Vinylmethyläther, Allylverbindungen und Vinylglycidyläther sowie gegebenenfalls Diene wie Butadien, Chlorbutadien, Isopren oder Chloropren.

Eine bevorzugte Gruppe von Comonomeren sind Derivate α,β-ungesättigter Carbonsäuren, z. B. der Acrylsäure, Methacrylsäure, Crotonsäure, Maleinsäure oder Fumarsäure, Dicarbonsäureanhydride wie Maleinsäureanhydrid, α,β-ungesättigte Nitrile wie Acrylnitril, Methacrylnitril, Crotonnitril, α,β-ungesättigte Carbonsäureamide wie Acrylsäureamid, Methacrylsäureamid, Crotonsäureamid und α,β-ungesättigte Carbonsäureester wie Methylacrylat, Aethylacrylat, Propylacrylat, Butylacrylat, Pentylacrylat, Hexylacrylat, Octylacrylat, 2-Aethylhexylacrylat, Isopropylacrylat, Isobutylacrylat und die analogen Methacrylsäure-und Crotonsäureester. Copolymere mit Maleinsäureanhydrid können auch direkt als zusätzliche Härter eingesetzt werden. Beispiele für säuregruppenhaltige Polymere, die aus zwei oder mehr Monomeren bestehen, sind :

Poly [alkyl(meth) acrylat/(meth) acrylsäure]
Poly [alkyl(meth) acrylat(I)/alkyl(meth) acrylat(II)/(meth) acrylsäure]
Poly [styrol(alkyl(meth) acrylat)(meth) acrylsäure]
Poly [styrol/(meth) acrylsäure]
Poly [styrol/maleinsäureanhydrid], sowie deren Halbester und Halbamide, Polymaleinsäureanhydrid, sowie deren Teilester und -amide.

Die Entwicklung kann bei Temperaturen von 20° bis 100 °C erfolgen. Geeignete Entwickler sind die zuvor genannten Lösungsmittel und ferner Alkohole wie Methanol, Aethanol, Propanol, Butanol, Methylcellosolve®, Aethylenglykolmonomethyl-, -äthyl-, -propyl-, oder -butyläther, Carbonsäureamide und Lactame wie Formamid, Acetamid, N-Methylformamid, N,N-Dimethylformamid, N,N-Dimethylacetamid, N,N-Diäthylacetamid, γ-Butyrolactan, ε-Caprolactam, N-Methylpyrrolidin, N-Methylcaprolactam, Tetramethylharnstoff, Hexamethylphosphorsäureamid ; primäre, sekundäre und tertiäre Amine wie Methyl-, Aethyl-, Propyl-, Butylamin, Pyrrolidin, Piperidin, Morpholin, Dimethylamin, Diäthylamin, Methyläthylamin, Trimethyl- oder Triäthylamin, N-Methylpyrrolidin, N-Methylpiperidin, N-Methylmorpholin. Vorteilhaft werden Gemische solcher Lösungsmittel verwendet.

Das Tempern bzw. die Härtung wird im allgemeinen je nach Verwendungszweck bei Temperaturen von 50 bis 200 °C, vorzugsweise 60 bis 150 °C, vorgenommen.

Mit dem erfindungsgemässen Beschichtungsmittel erhält man Abbildungen mit hoher Auflösung und guter Qualität. Die Schutzüberzüge bzw. Abbildungen weisen die hervorragenden mechanischen, thermischen und elektrischen Eigenschaften von Epoxidharzen auf. Insbesondere ist auf einen hohen spezifischen Durchgangswiderstand hinzuweisen. Ferner kann das Beschichtungsmittel auf Grund seiner Lagerstabilität als Einkomponentensystem angeboten werden, das unter dem Einfluss von Licht und Wärme härtbar ist.

Die nachfolgenden Beispiele erläutern die Erfindung näher. Die Abkürzung Gt. steht für Gewichtsteile. Die verwendeten Epoxidharze sind solche auf der Basis von Bisphenol-A und Epichlorhydrin.

## Beispiel 1

Eine Beschichtungslösung wird aus

48,0 Gt. einer 50 %igen Epoxidharzlösung in Aethylglykolacetat (Epoxidwert : 0,25-0,42, Erweichungspunkt : 100-110 °C und mittleres Molekulargewicht 3 230),
15,0 Gt. einer 40 %igen Epoxidharzlösung in Methyläthylketon, deren Viskosität nach DIN 53'015 bei 25 °C 620-1 070 mPa s beträgt,
20,0 Gt. 1,1,1-Trimethylolpropantriacrylat,
0,4 Gt. Benzoin,
0,4 Gt. Michlers Keton,
8,0 Gt. einer Farbstofflösung, die aus
195,15 Gt. Methylglykol
3,35 Gt. eines blauen Farbstoffs des Typs Solvent Blue 67 und
1,50 Gt. eines Verlaufsmittels (Barolev-III) besteht,
sowie
0,26 Gt. Benzotriazol

hergestellt und auf gereinigtes, mit Leiterzügen und durchkontaktierten Bohrlöchern versehenes, beidseitig kupferkaschiertes Basismaterial mit einer Drahtrakel aufgebracht und getrocknet. Das Trockenschichtgewicht beträgt 30 g/m$^2$.

Die Schicht wird mit einer 5 kW Metallhalogenidlampe unter einer, die Bohrlöcher abdeckenden Photomaske 60 Sekunden bildmässig belichtet, danach bei 135 °C getempert und anschliessend in einem Durchlaufentwicklungsgerät bei 20 °C und einer Geschwindigkeit von 1,6 m/min in einer Mischung aus

50 Gt. Propylencarbonat
30 Gt. Diäthylenglykol-n-butyläther und
20 Gt. γ-Butyrolacton

entwickelt.

Beim nachfolgenden Löten (10 sec. und 270 °C) entstehen an den freigelegten Bohrlöchern einwandfreie Lötaugen.

Der nach DIN 53'482 gemessene Spez. Durchgangswiderstand der Lötstopmaske beträgt $1 \cdot 10^{16}$ $\Omega \cdot cm$.

## Beispiel 2

Zu einer Beschichtungslösung entsprechend Beispiel 1 werden 6,0 Gt. einer 10 %igen Lösung von Dicyandiamid in Methylglykol zugegeben und wie in Beispiel 1 verarbeitet.

Wie in Beispiel 1 sind die getemperten Nichtbildstellen leicht zu entwickeln und bilden nach dem Löten fehlerfreie Lötaugen.

Der nach DIN 53'482 gemessene spezifische Durchgangswiderstand der Maske beträgt $1 \cdot 10^{16}\ \Omega \cdot$ cm.

Beispiel 3

Eine Beschichtungslösung entsprechend Beispiel 1, deren Viskosität bei 25 °C 740 mPa s beträgt, wird im Curtain-Coating Verfahren auf gereinigtes, mit Leiterzügen und durchkontaktierten Bohrlöchern versehenes, beidseitig kupferkaschiertes Basismaterial aufgebracht und getrocknet. Das Trockenschichtgewicht beträgt 30 g/m$^2$.

Die Schicht wird zunächst 3 Sekunden mit einer 5 kW Metallhalogenidlampe flächenmässig vorbelichtet und anschliessend unter einer geeigneten Photomaske 40 Sekunden bildmässig belichtet.

Danach wird mit Cyclohexanon entwickelt und bei 270 °C 10 Sekunden gelötet. Die Löstellen sind einwandfrei.

Beispiel 4

Eine Beschichtungslösung wird aus

19,20 Gt. einer 50 %igen Epoxidharzlösung gemäss Beispiel 1,
7,50 Gt. einer 40 %igen Epoxidharzlösung gemäss Beispiel 1,
3,20 Gt. einer 75 %igen Epoxidharzlösung (auf Basis Tetrabrombisphenol-A und Epichlorhydrin, Ep-Wert : 2,0-2,2 ; Bromgehalt : 21,2 % ± 2 auf Festharz) in Aethylglykolacetat,
10,0 Gt. 1,1,1-Trimethylolpropantriacrylat,
0,2 Gt. Benzoin,
0,2 Gt. Michlers Keton,
4,0 Gt. der in Beispiel 1 beschriebenen Farbstofflösung,
0,13 Gt. Benzotriazol, und
1,44 Gt. einer 10 %igen Lösung von Dicyandiamid in Methylglykol

hergestellt und entsprechend Beispiel 1 beschichtet, belichtet und getempert.

Anschliessend wird im Durchlaufentwicklungsgerät bei 27 °C und 0,8 m/min mit dem in Beispiel 1 beschriebenen Entwickler entwickelt, danach bei 270 °C 10 Sekunden gelötet.

Die Lötstellen sind einwandfrei.

Spez. Durchgangswiederstand nach DIN 53'482 : $1 \cdot 10^{15}\ \Omega \cdot$ cm.

Beispiel 5

Eine Beschichtungslösung wird aus

9,44 Gt. einer 50 %igen Epoxidharzlösung in Aethylglykolacetat (EP-Wert : 0,25-0,42 und Erweichungspunkt : 100-110 °C),
3,75 Gt. einer 40 %igen Epoxidharzlösung in Methyläthylketon, deren Viskosität nach DIN 53'015 bei 25 °C 620-1 070 mPa s beträgt,
5,0 Gt. 1,1,1-Trimethylolpropantriacrylat,
0,1 Gt. Benzoin,
0,1 Gt. Michlers Keton,
2,0 Gt. der in Beispiel 1 beschriebenen Farbstofflösung,
1,5 Gt. einer 10 %igen Lösung von Dicyandiamid in Methylglykol und
7,1 Gt. einer Mattierungspaste, die sich aus
  17,9 Gt. eines Epoxidharzes, dessen Ep-Wert 0,25-0,42 beträgt,
  36,6 Gt. Talkum und
  45,5 Gt. Aethylglykolacetat

zusammensetzt,
hergestellt und auf eine gereinigte und mit Leiterzügen versehene Schaltkarte mit einer Drahtrakel aufgebracht und getrocknet.

Die Schicht wird zunächst 3 Sekunden mit einer 5 kW Metallhalogenidlampe flächenmässig vorbelichtet und danach unter einer geeigneten Photomaske 40 Sekunden bildmässig belichtet.

Entwickelt wird 60 Sekunden mit Cyclohexanon und anschliessend wird 1 Stunde bei 130-135 °C getempert.

Die über eine Lötwelle bei 260 °C geführte Lackmaske ist einwandfrei, die Lötaugen sind gut ausgebildet.

Der an der Lackmaske durchgeführte Gitterschnitt-Test nach DIN 53'151 zeigt den Wert Gt = 0 an.

## Beispiel 6

Die Beschichtungslösung entsprechend Beispeil 1 wird auf elektrolytisch aufgerauhtes, 0,1 mm starkes Aluminium zu einer Stärke von ungefähr 5 g/m² durch Aufschleudern aufgetragen und getrocknet. Danach wird 60 Sekunden unter einer Photomaske mit einer 5 kW Metallhalogenidlampe belichtet und anschliessend 40 Sekunden mit Cyclohexanon entwickelt.

Danach wird mit Wasser abgespült, durch Ueberwischen mit 1 %iger Phosphorsäure fixiert und die Oberfläche mit wässriger Gummiarabikumlösung konserviert.

Die so entstandene Druckform eignet sich für den Offsetdruck und liefert mindestens 100 000 einwandfreie Druckmuster.

## Beispiel 7

Eine Beschichtungslösung entsprechend Beispiel 1 wird auf ein in der Leiterplattenfertigung bekanntes, kupferkaschiertes Basismaterial durch Aufschleudern aufgebracht und getrocknet.

Danach wird unter einer Schaltvorlage mit einer 5 kW Metallhalogenidlampe belichtet und anschliessend mit Cyclohexanon entwickelt.

Geätzt wird mit einer handelsüblichen Fe-III-Chloridätze, gegen die die vernetzten Bildbereiche resistent sind.

## Beispiel 8

Eine Beschichtungslösung ist aus

19,20 Gt. einer 50 %igen Epoxidharzlösung gemäss Beispiel 1 (Ep-Wert : 0,25-0,42 und Erweichungspunkt : 100-110 °C),
7,50 Gt. einer 40 %igen Epoxidharzlösung gemäss Beispiel 1,
16,80 Gt. einer Mattierungspaste, die durch Vermahlen von
214,5 Gt. einer 33,3 %igen Lösung einer Poly(methylmethacrylat/methacrylsäure), Säurezahl 60 mg KOH/g Polymer und mittleres Molekulargewicht 16 000, in Methylglykol,
142,5 Gt. Talkumpuder,
3,0 Gt. Silan, Typ A-187
3,0 Gt. deionisiertes Wasser in
137,0 Gt. Cyclohexanon

bereitet wird,

10,0 Gt. 1,1,1-Trimethylolpropantriacrylat,
0,20 Gt. Benzoin,
0,20 Gt. Michlers Keton,
4,00 Gt. einer Farbstofflösung, die aus
195,15 Gt. Methylglykol
3,35 Gt. eines blauen Farbstoffs des Typs Solvent Blue 67 und
1,50 Gt. eines Verlaufsmittels (Barolev III), besteht,
0,13 Gt. Benzotriazol und
2,50 Gt. einer Härtermischung, die aus
100 Gt. Dicyandiamid
20 Gt. Chlortoluron
5 Gt. Triäthanolamin und
1 375 Gt. Methylglykol hergestellt wurde,

zusammengesetzt und wird auf gereinigtes, mit Leiterzügen und durchkontaktierten Bohrlöchern versehenes, beidseitig kupferkaschiertes Basismaterial mit Hilfe einer Drahtrakel aufgebracht und getrocknet. Das Trockenschichtgewicht beträgt ca. 30 g/m².

Danach wird die Lackschicht mit einer 5 kW Metallhalogenidlampe unter einer die Bohrlöcher abdeckenden Photomaske 60 Sekunden bildmässig belichtet, anschliessend in einem Durchlaufentwicklungsgerät bei 27 °C und einer Geschwindigkeit von 0,8 m/min in einer Mischung aus

50 Gt. Propylencarbonat
30 Gt. Diäthylenglykol-n-butyläther und
20 Gt. γ-Butyrolacton

entwickelt, danach 1 Stunde bei 135 °C thermisch gehärtet.

Beim nachfolgenden Löten (10 sek. und 270 °C) entstehen an den freigelegten Bohrlöchern einwandfreie Lötaugen.

Der nach DIN 53'481 gemessene Durchgangswiderstand der Lötstopmaske beträgt $1 \cdot 10^{15}\ \Omega \cdot cm$.

## Beispiel 9

Eine Beschichtungslösung wird aus folgenden Einzelkomponenten

172,26 Gt. eines festen Epoxidharzes gemäss Beispiel 1 (Epoxidwert 0,25-0,42),
53,83 Gt. eines Epoxidharzes, dessen 32 %ige Lösung in Aethylglykolacetat bei 25 °C eine Viskosität von 1 240-2 700 mPa s besitzt,
43,06 Gt. Poly(methylmethacrylat/methacrylsäure 9 : 1), [P(MMA/MAA)]
179,46 Gt. 1,1,1-Trimethylolpropantriacrylat,
7,17 Gt. 2-Tertiärbutylanthrachinon/Michlers Keton 1 : 1,
2,33 Gt. Benzotriazol (Haftvermittler),
5,38 Gt. Dicyandiamid/Chlortoluron 5 : 1 (Härter),
1,26 Gt. Farbstoff Solvent Blue 67,
0,71 Gt. Verlaufsmittel Barolev III,
42,88 Gt. Mattierungsmittel Talkum,
0,90 Gt. Silan, Typ A-187, und
490,76 Gt. Lösungsmittel, Aethylglykolacetat + Methylglykol

angesetzt und im Curtain-Verfahren auf gereinigtes, mit einem Leiterbild versehenes, beidseitig kupferkaschiertes Basismaterial aufgebracht und getrocknet.

Das Trockenschichtgewicht beträgt 25-35 $g/m^2$.

Die Schicht wird 40 Sekunden unter einer Photomaske mit einer 5 kW Metallhalogenidlampe belichtet, mit dem in Beispiel 8 beschriebenen Entwickler bei 20 °C und 1,6 m/min entwickelt und anschliessend 1 h/135 °C thermisch gehärtet.

Zum Löten wird die mit der gehärteten Lackmaske überzogene gedruckte Schaltung über eine übliche Lötwelle bei 260 °C geführt.

Ausgesparte Leiterbahnen und freigelegte Bohrlöcher zeigen ein einwandfreies Lötbild.

Ersetzt man das oben angegebene P(MMA/MAA, 9 : 1) durch P(MMA/MAA), das eine Säurezahl von 156 mg KOH/g Polymer aufweist, oder durch ein P(MMA/MAA), dessen Säurezahl 176 mg HOH/g Polymer beträgt, erhält man Lötstopmasken mit gleich guten Eigenschaften.

## Beispiel 10

Die in den Beispielen 8 und 9 beschriebenen gehärteten Lackmasken werden mit einem mit Aceton getränkten Wattebausch 20 mal überwischt. Die Kupferoberfläche des Leiterbildes kann mit dieser Behandlungsweise nicht freigelegt werden und zeigt die Resistenz der Lackmaske.

In Methylenchlorid eingetauchte Proben sind mehr als 120 Sekunden darin beständig, was für einen hohen Vernetzungsgrad der Lackschicht spricht.

Die vor und nach der Entwicklung gemessenen Schichtdicken zweier, in den Beispielen 8 und 9 beschriebener Lackmasken, zeigen auf, dass kein Schichtdickenverlust bei der Entwicklung auftritt, was wiederum die Resistenz der Lackmaske zeigt.

## Beispiel 11

Eine Beschichtungslösung entsprechend Beispiel 8 wird auf elektrolytisch aufgerauhtes und anodisiertes Aluminium mit einer Schichtdicke von ca. 5 $g/m^2$ aufgetragen und getrocknet.

Danach wird mit einer 5 kW Metallhalogenidlampe belichtet, mit Cyclohexanon in einem Sprühentwickler entwickelt, mit Wasser abgespült und getrocknet. Anschliessend wird die Schicht 5 Minuten bei 200 °C gehärtet, die Oberfläche durch Ueberwischen mit 1 %iger Phosphorsäure sauer gestellt und mit wässriger Gummiarabikumlösung konserviert.

Die so entstandene Druckform ist besonders abriebfest und eignet sich für den Offsetdruck, sie liefert mindestens 100 000 einwandfreie Druckmuster.

## Beispiel 12

Eine Beschichtungslösung ist aus

38,40 Gt. einer 50 %igen Epoxidharzlösung gemäss Beispiel 1, (Ep-Wert : 0,25-0,42 und Erweichungspunkt : 100-110 °C),

18,75 Gt. einer 32 %igen Epoxidharzlösung in Aethylglykolacetat, deren Viskosität nach DIN 53'015 bei 25 °C 1 240-2 700 mPa s beträgt,

24,20 Gt. einer Mattierungspaste, die durch Vermahlen von

857,0 Gt. einer 25 %igen Lösung einer Poly(methylmethacrylat/butylmethacrylat/methacrylsäure), 45 : 45 :10, Säurezahl 59 mg KOH/g Polymer, in Cyclohesanon,

4,5 Gt. Silan, Typ A-187,

107,0 Gt. Talkumpuder,

107,0 Gt. $Al_2O_3$,

4,5 Gt. deionisiertes Wasser bereitet wird,

20,00 Gt. 1,1,1-Trimethylolpropantriacrylat

0,80 Gt. 2-Tertiärbutylanthrachinon/Michlers Keton 1 : 1,

8,00 Gt. einer Farbstofflösung entsprechend Beispiel 8,

0,26 Gt. Benzotriazol und

5,00 Gt. einer Härtermischung entsprechend Beispiel 8.

zusammengesetzt und wird auf gereinigtes, mit Leiterzügen und durchkontaktierten Bohrlöchern versehenes, beidseitig kupferkaschiertes Basismaterial mit Hilfe einer Drahtrakel aufgebracht und getrocknet.

Danach wird die Lackschicht bildmässig 60 Sekunden belichtet und anschliessend in einem Durchlaufentwicklungsgerät bei 27 °C und einer Geschwindigkeit von 3,0 m/min mit dem in Beispiel 8 beschriebenen Entwickler entwickelt.

Gehärtet wird 1 Stunde bei 135 °C.

Nach dem Löten (10 sek. bei 270 °C) zeigen die ausgesparten Leiterbahnen und Bohrlöcher ein einwandfreies Lötbild.

Verwendet man anstelle des in der Mattierungspaste beschriebenen Terpolymeren P(MMA/BuMA/MAA), 45 : 45 : 10, ein Terpolymeres Poly(styrol/butylmethacrylat/methacrylsäure), 25 : 60 : 15, dessen Säurezahl 154 mg KOH/g Polymer beträgt, erhält man ebenfalls eine Lötstopmaske mit hervorragenden Eigenschaften.

## Beispiel 13

Eine Beschichtungslösung wird entsprechend Beispiel 9 bereitet und mit 6 % Antimon-III-oxid, bezogen auf Festkörper, versetzt und vermahlen.

Eine mit dieser Lösung hergestellte Lötstopmaske weist nach praxisgerechter Verarbeitung gut ausgebildete einwandfreie Lötaugen auf.

## Beispiel 14

Eine Beschichtungslösung ist aus

40,80 Gt. einer 50 %igen Epoxidharzlösung auf Basis Novolak in Methylglykol (Epoxidwert : 0,425, Erweichungspunkt : 90 °C, mittleres Molekulargewicht 1 600),

18,75 Gt. einer 32 %igen Epoxidharzlösung in Aethylglykolacetat, deren Viskosität bei 25 °C 1 240-2 700 mPa s beträgt,

25,20 Gt. einer Mattierungspaste, die durch Vermahlen von

321,75 Gt. einer 33,3 %igen Lösung einer Poly(methyl/methacrylat/methacrylsäure), Säurezahl 156 mg KOH/g Polymer, in Methylglykol,

4,5 Gt. Silan, Typ A-187,

213,75 Gt. Talkumpuder Ultra mix

4,5 Gt. deionisiertes Wasser und

205,50 Gt. Cyclohexanon

hergestellt wird,

20,00 Gt. 1,1,1-Trimethylolpropantriacrylat,

0,80 Gt. 2-tert. Butylanthrachinon/Michlers Keton 1 : 1,

8,00 Gt. Gt. einer Farbstofflösung entsprechend Beispiel 8,

0,26 Gt. Benzotriazol und

5,00 Gt. einer Härtermischung entsprechend Beispiel 8

zusammengesetzt und wird entsprechend Beispiel 13 auf das beidseitig kupferkaschierte Basismaterial aufgebracht.

Dann wird die getrocknete Lacksicht 3 Sekunden flächenmässig vorbelichtet und anschliessend 60 Sekunden bildmässig belichtet.

Entwickel wird entsprechend Beispiel 1 3 Minuten bei Raumtemperatur mit einem Pinsel, danach 1 Std. bei 130-135 °C gehärtet.

Nach dem Löten (10 Sekunden bei 270 °C) zeigen die ausgesparten Leiterbahnen eine einwandfreies Lötbild.

**Patentansprüche**

1. Photopolymerisierbares Beschichtungsmittel, enthaltend gegebenenfalls neben üblichen Zusätzen

a) mindestens ein Epoxidharz auf der Basis von aromatischen Polyolen und Epichlorhydrin mit einem Epoxidwert von 0,1 bis 0,6 Aequivalenten pro kg Harz und einem mittleren Molekulargewicht von 1 000 bis 10 000,

b) mindestens ein Epoxidharz auf der Basis von aromatischen Polyolen und Epichlorhydrin mit einem mittleren Molekulargewicht von über 10 000, wobei das Gewichtsverhältnis von a : b grösser als 1 ist,

c) mindestens ein lichtempfindliches, polyäthylenisch ungesättigtes Monomer mit endständigen Aethylengruppen und

d) mindestens einen Photoinitiator und/oder Sensibilisator.

2. Beschichtungsmittel gemäss Anspruch 1, dadurch gekennzeichnet, dass es in einem organischen Lösungsmittel gelöst ist.

3. Beschichtungsmittel gemäss Anspruch 1, dadurch gekennzeichnet, dass es sich bei den Epoxidharzen a) und b) um solche auf der Basis von Bisphenolen und Novolaken handelt.

4. Beschichtungsmittel gemäss Anspruch 1, dadurch gekennzeichnet, dass das ungesättigte Monomer c) ein Acryl- oder Methacrylsäureester eines Polyols ist.

5. Beschichtungsmittel gemäss Anspruch 1, dadurch gekennzeichnet, dass das Gewichtsverhältnis der Epoxidharze a) + b) zum Monomer c) von 1 : 9 bis 9 : 1 beträgt.

6. Beschichtungsmittel gemäss Anspruch 1, dadurch gekennzeichnet, dass es zusätzlich einen Härter für Epoxidharze alleine oder zusammen mit einem Härtungsbeschleuniger enthält.

7. Beschichtungsmittel gemäss Anspruch 1, dadurch gekennzeichnet, dass es zusätzlich ein säuregruppenhaltiges Polymer als Härter enthält.

8. Beschichtungsmittel gemäss Anspruch 7, dadurch gekennzeichnet, dass das Polymer eine Säurezahl von 10 bis 500 mg KOH/g Polymer aufweist.

9. Photopolymerisierbares Material, bei dem auf ein Trägermaterial eine Schicht des Mittels gemäss den Ansprüchen 1 bis 8 aufgebracht ist.

10. Verwendung des Materials gemäss Anspruch 9 als photographisches Aufzeichnungsmaterial für Reliefabbildungen durch bildmässiges Belichten durch eine Photomaske und anschliessendes Entwickeln.

**Claims**

1. A photopolymerisable coating agent which contains

a) at least one epoxy resin based on aromatic polyols and epichlorohydrin and having an epoxide value of 0.1 to 0.6 equivalents per kg of resin and a mean molecular weight of 1,000 to 10,000,

b) at least one epoxy resin based on aromatic polyols and epichlorohydrin and having a mean molecular weight of above 10,000, the weight ratio of a : b being greater than 1,

c) at least one light-sensitive polyethylenically unsaturated monomer having terminal ethylene groups and

d) at least one photoinitiator and/or sensitiser, and can, if desired, also contain customary additives.

2. The coating agent according to claim 1, which is dissolved in an organic solvent.

3. The coating agent according to claim 1, wherein the epoxy resins a) and b) are based on bisphenols and novolaks.

4. The coating agent according to claim 1, wherein the unsaturated monomer c) is an acrylate or methacrylate of a polyol.

5. The coating agent according to claim 1, wherein the weight ratio of the epoxy resins a) + b) to the monomer c) ranges from 1 : 9 to 9 : 1.

6. The coating agent according to claim 1, which contains an additional hardener for epoxy resins on its own or together with a hardening accelerator.

7. The coating agent according to claim 1, which contains a polymer which contains acid groups, as an additional hardener.

8. The coating agent according to claim 7, wherein the polymer has an acid value of 10 to 500 mg of KOH/g of polymer.

9. A photopolymerisable material where a support material has been coated with a layer of the agent according to claims 1 to 8.

10. The use of the material according to claim 9, as a photographic recording material for relief images by imagewise exposure through a photomask and subsequent development.

**Revendications**

1. Produit de revêtement photopolymérisable qui, éventuellement en plus d'additifs usuels, contient :

a) au moins une résine époxydique à base de polyols aromatiques et d'épichlorhydrine qui a un indice d'époxy de 0,1 à 0,6 équivalent par kilogramme de résine et une masse moléculaire moyenne de 1 000 à 10 000,

b) au moins une résine époxydique à base de polyols aromatiques et d'épichlorhydrine qui a une masse moléculaire moyenne supérieure à 10 000, le rapport pondéral de la résine a) à la résine b) étant supérieur à 1,

c) au moins un monomère poly-éthylénique photo-sensible qui renferme des radicaux éthyléniques terminaux et

d) au moins un photo-amorceur et/ou un sensibilisateur.

2. Produit de revêtement selon la revendication 1 caractérisé en ce qu'il est dissous dans un solvant organique.

3. Produit de revêtement selon la revendication 1 caractérisé en ce qu'il contient, comme résines époxydiques a) et b), des résines de ce type qui sont à base de bis-phénols et de novolaques.

4. Produit de revêtement selon la revendication 1 caractérisé en ce que le monomère insaturé c) est un ester acrylique ou méthacrylique d'un polyol.

5. Produit de revêtement selon la revendication 1 caractérisé en ce que le rapport pondéral des résines époxydiques a) + b) au monomère c) est compris entre 1 : 9 et 9 : 1.

6. Produit de revêtement selon la revendication 1 caractérisé en ce qu'il contient en outre un durcisseur pour résines époxydiques, seul ou associé à un accélérateur de durcissement.

7. Produit de revêtement selon la revendication 1 caractérisé en ce qu'il contient en outre, comme durcisseur, un polymère porteur de radicaux acides.

8. Produit de revêtement selon la revendication 7 caractérisé en ce que le polymère a un indice d'acide compris entre 10 et 500 mg de KOH par gramme du polymère.

9. Matière photopolymérisable dans laquelle une couche d'un produit selon l'une quelconque des revendications 1 à 8 est appliquée sur une matière support.

10. Application de la matière selon la revendication 9 comme matière d'enregistrement photographique pour la création d'images en relief par exposition à un rayonnement conformément à une image, à travers un photomasque, suivie d'un développement.